# EUROPEAN PATENT SPECIFICATION

(11) **EP 3 427 389 B1**
(45) Date of publication and mention of the grant of the patent: **18.08.2021**
(21) Application number: 17773217.9
(22) Date of filing: 28.03.2017
(51) Int. Cl.: H04W 52/24

(54) **RESOURCE AND POWER ALLOCATION IN NON-ORTHOGONAL UPLINK TRANSMISSIONS**
RESSOURCEN- UND LEISTUNGSZUWEISUNG IN NICHTORTHOGONALEN UPLINK-ÜBERTRAGUNGEN
ATTRIBUTION DE RESSOURCES ET DE PUISSANCE DANS DES ÉMISSIONS DE LIAISON MONTANTE NON-ORTHOGONALES

(30) Priority: 29.03.2016 US 201615084105
(43) Date of publication of application: 16.01.2019
(73) Proprietor: Huawei Technologies Co., Ltd., Longgang District Shenzhen, Guangdong 518129 (CN)
(72) Inventor: LIU, Bin, San Diego, CA 92127 (US); TENNY, Nathan Edward, Poway, CA 92064 (US); STIRLING-GALLACHER, Richard, Shenzhen, Guangdong 518129, (CN)
(74) Representative: Gill Jennings & Every LLP
(86) International application number: PCT/CN2017/078459
(87) International publication number: WO 2017/167187

(56) References cited:
- WO-A1-2015/029729
- CN-A- 103 493 380
- CN-A- 103 518 339
- CN-A- 104 871 464
- US-A1- 2009 316 627
- US-A1- 2014 328 298

## Description

This application claims priority to U.S. non-provisional patent application Serial No. 15/084,105, filed on March 29, 2016 and entitled "Method and Apparatus for Resource and Power Allocation in Non-Orthogonal Uplink Transmissions".

### TECHNICAL FIELD

The present invention relates generally to managing the allocation of resources in a network, and in particular embodiments, to techniques and mechanisms for a method and apparatus for resource and power allocation in non-orthogonal uplink transmissions.

### BACKGROUND

Non-orthogonal multiple-access techniques may achieve better spectral efficiency than comparable orthogonal multiple-access techniques by virtue of using the same resource to carry portions of two or more different data streams. Sparse code multiple access (SCMA) is a non-orthogonal multiple-access technique that transmits multiple data streams over a set of sub-carrier frequencies using non-orthogonal spreading sequences. In SCMA, the received signal is typically processed using an iterative message passing algorithm (MPA) to decode the data streams. Non-orthogonal multiple access (NOMA) is another non-orthogonal multiple-access technique that superposes multiple data streams over the same physical resource block. In NOMA, the received signal is typically processed using an interference cancellation technique (e.g., successive interference cancellation (SIC)) to decode the data streams.

WO2015/029729 describes a method to enable uplink signal transmission power control that is suitable when non-orthogonal multiple access (NOMA) is used on the uplink.

US2014/0328298 describes a method, apparatus and software related product (e.g.: a computer readable memory) for implementing power control for uplink orthogonal and non-orthogonal resources for an uplink channel, e.g.: for PUCCH or PUCSH, when CoMP is utilized in a wireless network (e.g.: LTE).

### SUMMARY OF THE INVENTION

Technical advantages are generally achieved, by embodiments of this disclosure which describe a method and apparatus for resource and power allocation in non-orthogonal uplink transmissions.

According to a first aspect there is provided a method according to claim 1. According to a second aspect there is provided a system according to claim 5.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 illustrates a diagram of a wireless communications network;
FIG. 2 illustrates a flowchart of a method for power control and resource selection;
FIG. 3 illustrates a flowchart of another method for power control and resource selection;
FIG. 4 illustrates a diagram of a power allocation scheme;
FIG. 5 illustrates a diagram of a space code multiple access (SCMA) scheme;
FIG. 6 illustrates a diagram of a processing system; and
FIG. 7 illustrates a diagram of a transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of examples of this disclosure are discussed in detail below. It should be appreciated, however, that the concepts disclosed herein can be embodied in a wide variety of specific contexts, and that the specific examples discussed herein are merely illustrative and do not serve to limit the scope of the claims. Further, it should be understood that various changes, substitutions and alterations can be made herein without departing from the scope of this disclosure as defined by the appended claims.

When using orthogonal multiple access schemes, mobile devices transmit uplink signals over orthogonal channel resources to a base station. Power control is generally performed such that the signals transmitted over orthogonal channel resources arrive at the base station having similar received power levels in order to improve the uplink spectrum efficiency and achieve fairness among the different mobile devices. When using non-orthogonal multiple access schemes, the mobile devices transmit uplink signals over non-orthogonal channel resources. It is typically beneficial for the signals to arrive at the base station with different received power levels to facilitate non-orthogonal signal processing (e.g., successive interference cancellation (SIC), etc.). However, this may lead to unfairness among different mobile devices, as signals having higher received power levels generally support higher data rates. Hence, new mechanisms for resource and power allocation over non-orthogonal resources are desired.

Disclosed herein is an example power control scheme for non-orthogonal access that requires UEs to use lower open loop transmit power control targets when communicating uplink signals over links exhibiting higher path loss levels. This may increase the disparity between received power levels of signals communicated by cell-edge and cell center UEs, which in turn may facilitate non-orthogonal signal processing at the base station. On the other hand, cell edge UEs transmitting with less power may reduce the inter-cell interference and thus further improve system capacity. The power control scheme may be communicated in a downlink signal that prompts UEs to transmit non-orthogonal signals according to the power control scheme. Lower open loop power control targets may be associated with sets of non-orthogonal resources having greater bandwidth capacities according to the power control scheme. For example, lower open loop power control targets may be associated with sets of non-orthogonal resources comprising higher processing gains and/or higher coding gains. This may improve fairness amongst UEs, by allocating more bandwidth to cell-edge UEs. These and other aspects are disclosed in greater detail below.

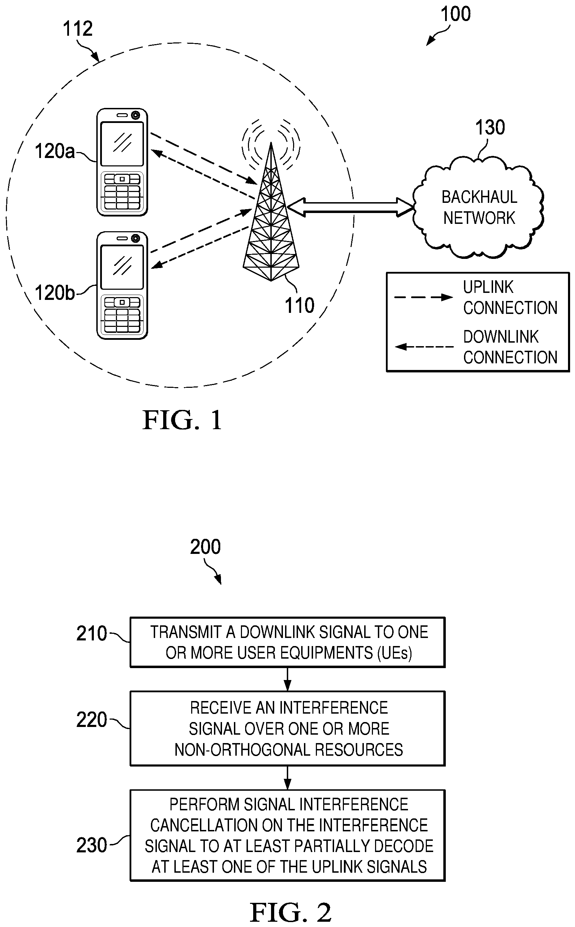

FIG. 1 illustrates a network 100 for communicating data. The network 100 comprises a base station 110 having a coverage area 112, a plurality of UEs 120a-120b, and a backhaul network 130. As shown, the base station 110 establishes uplink (dashed line) and/or downlink (dotted line) connections with the UEs 120, which serve to carry data from the UEs 120 to the base station 110 and vice-versa. Data carried over the uplink/downlink connections may include data communicated between the UEs 120, as well as data communicated to/from a remote-end (not shown) by way of the backhaul network 130. The base station 110 implements a grant-free uplink transmission scheme so that UEs 120 may contend for and access uplink resources without a request/grant mechanism. The grant-free uplink transmission scheme may be defined by the base station 110 or it may be set in a wireless standard (e.g., 3GPP). As used herein, the term "base station" refers to any component (or collection of components) configured to provide wireless access to a network, such as a macro-cell, a femtocell, a Wi-Fi access point (AP), or other wirelessly enabled devices. The terms "eNB" and "base station" are used interchangeably throughout this disclosure. Base stations may provide wireless access in accordance with one or more wireless communication protocols, e.g., long term evolution (LTE), LTE advanced (LTE-A), High Speed Packet Access (HSPA), Wi-Fi 802.11a/b/g/n/ac, etc. As used herein, the term "UE" refers to any component (or collection of components) capable of establishing a wireless connection with a base station. The terms "UE", "mobile device", and "mobile station (STA)" are used interchangeable throughout this disclosure. In some examples, the network 100 may comprise various other wireless devices, such as relays, low power nodes, etc.

FIG. 2 illustrates an example method 200 for power control and resource selection, as may be performed by an eNB. As shown, the method 200 begins at step 210, where the eNB transmits a downlink signal to one or more UEs. In an example, the downlink signal includes control information that prompts the UE(s) to use lower transmit power levels when communicating data over wireless links exhibiting higher path loss levels. For example as shown in FIG. 1, the UE 120b is physically farther from the eNB 110 than the UE 120a. The UE 120b may be associated with a higher path loss from the eNB 110 and thus may be prompted to transmit non-orthogonal signals according to a lower transmit power target. In other instances, a UE positioned closer to an eNB may nevertheless experience a higher path loss than a UE positioned farther from the eNB, such as may occur when an object (e.g., a building) obstructs a line of sight path between the eNB and the closer of the two UEs. In such instances, the UE positioned closer to the eNB may transmit according to a lower transmit power target than the UE positioned farther from the eNB. Thereafter, the method 200 proceeds to step 220, where the eNB receives an interference signal over one or more non-orthogonal resources. In an example, the interference signal includes uplink signals transmitted by different UEs according to the control information. As used herein, the term "interference signal" refers to received signal that has two or more signal components associated with different data streams. Subsequently, the method 200 proceeds to step 230, where the eNB performs successive interference cancellation on the interference signal to at least partially decode at least one of the uplink signals.

The eNB may decode uplink signals with higher received power levels before decoding signals with lower received power levels. In an example, when decoding the signals with lower received power levels, the eNB may subtract the already decoded higher received power components from total received power.

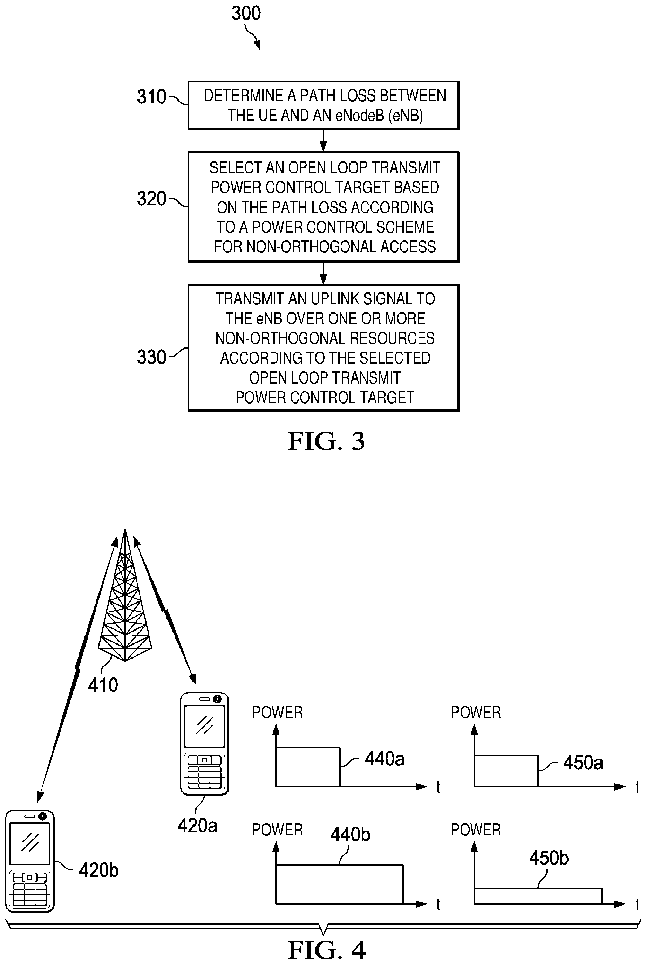

FIG. 3 illustrates an example method 300 for power control and resource selection, as may be performed by a user equipment (UE). As shown, the method 300 begins at step 310, where the UE determines a path loss between the UE and an eNodeB (eNB). Thereafter, the method 300 proceeds to step 320, where the UE selects an open loop transmit power control target based on the path loss according to a power control scheme for non-orthogonal access. In an example, the power control scheme requires that lower open loop transmit power control targets be selected for higher path loss levels. Subsequently, the method 300 proceeds to step 330, where the UE transmits an uplink signal to the eNB over one or more non-orthogonal resources according to the selected open loop transmit power control target.

In some examples, the UE directly selects the uplink transmit power level based on the path loss. In other examples, the UE indirectly selects the uplink transmit power target based on the path loss. For example, the UE may select a set of non-orthogonal resources based on the path loss, and then use an open loop transmit power control target associated with the set of non-orthogonal resources to perform the uplink transmission. In such an example, the open loop power control scheme may identify which one of the sets of non-orthogonal resources is associated with the path loss. The open loop power control scheme may also identify which open loop transmit power control target to use when transmitting uplink signals over a given set of non-orthogonal resources.

In an example, the UE receives a downlink signal from the eNB comprising control information that associates open loop transmit power control targets with path loss levels. In such an example, the UE may identify which one of the open loop transmit power control targets is associated with the determined path loss between the UE and the eNB based on the control information. In another example, the UE may identify which one of the open loop transmit power control targets is associated with the determined path loss between the UE and the eNB based on a local mapping between path loss levels and open loop transmit power control targets. In such an example, the local mapping between path loss levels and open loop transmit power control targets may be a priori information to the UE.

In an example, the control information received from the eNB (or the local mapping information of the UE) further identifies sets of non-orthogonal resources associated with open loop power control targets. Non-orthogonality of resources may be over time, frequency, space, and/or code domains. For instance, each non-orthogonal resource set may be a different codebook gain or a different set of non-orthogonal multiple access (NOMA) physical resource blocks. Lower open loop power control targets may be associated with sets of non-orthogonal resources having greater bandwidth capacities. For example, the downlink signaling may associate lower open loop power control targets with non-orthogonal spreading sequences having higher processing gains and/or higher coding gains, for instance for low density signature-orthogonal frequency division multiplexing (LDS-OFDM) spreading sequences or sparse code multiple access (SCMA) spreading sequences. As another example, the downlink signal may associate lower open loop power control targets with larger, or higher numbers of, non-orthogonal multiple access (NOMA) physical resource blocks (PRBs). The UE may transmit an uplink signal to the eNB over non-orthogonal resource(s) associated with the selected open loop transmit power control target at a transmit power level based on the selected open loop transmit power control target. This transmit power level may be an initial transmit power level, and the UE may adjust the transmit power level later, based on for example a closed loop transmit power control scheme.

Example open loop power control schemes may specify different retransmission schemes. For example, a UE may transmit an uplink signal to an eNB over a first set of non-orthogonal resources at a first open loop transmit power level based on an open loop transmit power control target associated with the first set of non-orthogonal resources. If the uplink signal is not successfully received by the eNB, the UE may retransmit the uplink signal according to the open loop power control scheme. In one example, the open loop power control scheme specifies a conservative retransmission scheme, and the UE retransmits the uplink signal over the first set of non-orthogonal resources at an adjusted transmit power level. The adjusted transmit power level may be between the first open loop transmit power level based on a first transmit power control target and a second open loop transmit power level based on a second transmit power control target. The second open loop transmit power target may be associated with a second set of non-orthogonal resources and may be larger than the first open loop transmit power level. If the uplink retransmission is not successful, the UE may perform additional retransmission over the first set of non-orthogonal resources. The UE may increase the transmit power level at each successive retransmission, by a fixed amount or random amount. When the transmit power level reaches the second open loop transmit power level that corresponds to the second set of non-orthogonal resources, the UE may retransmit the uplink signal over the second set of non-orthogonal resources. In another example, the open loop power control scheme specifies an aggressive retransmission scheme, and the UE retransmits the uplink signal to the eNB over the second set of non-orthogonal resources at the second open loop transmit power level when performing the first retransmission.

FIG. 4 illustrates a diagram of an example power allocation scheme. As shown, a first UE 420a is physically closer to an eNB 410 than a second UE 420b. In this example, a link between the UE 420b and the eNB 410 exhibits a higher path loss than the link between the UE 420a and the eNB 410. As a result, the power control scheme prompts the UE 420b to transmit non-orthogonal signals using a lower transmit power control target over a longer duration, while prompting the UE 420a to transmit non-orthogonal signals using a higher transmit power control target over a shorter duration. It should be noted that even though the time domain is used to illustrate transmission durations of an example power allocation scheme in FIG. 4, non-orthogonal signals may be transmitted using a lower transmit power control target over a longer duration in the time, frequency, and/or code domain. The graphs 450a and 450b indicate the received power levels and durations for the signals transmitted by the UEs 420a and 420b, respectively. Similarly, the graphs 440a and 440b indicate transmit power levels and durations for signals transmitted by the UEs 420a and 420b, respectively.

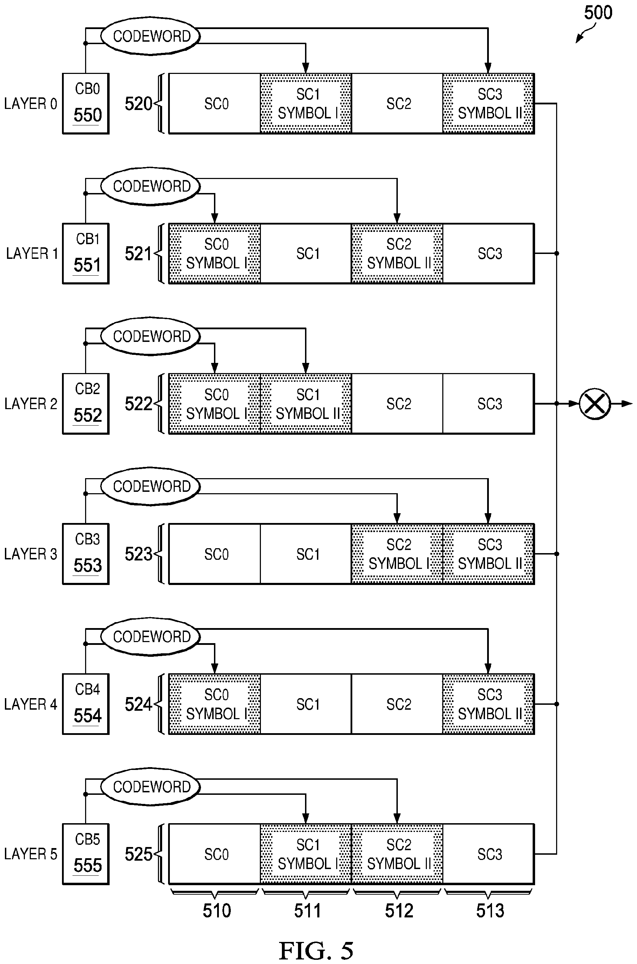

FIG. 5 illustrates a diagram of an SCMA transmission scheme 500. As shown, the SCMA transmission scheme 500 assigns different codebooks 550, 551, 552, 553, 554, 555 to different SCMA layers 520, 521, 522, 523, 524, 525, respectively. Each of the SCMA layers 520, 521, 522, 523, 524, 525 are mapped to a different combination of sub-carrier frequencies in the set of subcarrier frequencies 510, 511, 512, 513 over which the data streams are communicated. In particular, the SCMA layer 520 maps to the subcarrier frequencies 511, 512, the SCMA layer 521 maps to the subcarrier frequencies 510, 512, the SCMA layer 522 maps to the subcarrier frequencies 510, 511, the SCMA layer 523 maps to the subcarrier frequencies 512, 513, the SCMA layer 524 maps to the subcarrier frequencies 510, 513, and the SCMA layer 525 maps to the subcarrier frequencies 511, 512. Based on the multi-layer SCMA transmission scheme, a single codeword from each of the respective codebooks 550, 551, 552, 553, 554, 555 is selected to map a corresponding data stream to the corresponding sub-carrier frequencies 510, 511, 512, 513 for each transmission period. Each codeword a respective codebook maps a different combination of symbols to the respective combination of sub-carrier frequencies. The data streams are then transmitted over a wireless network to a receiver.

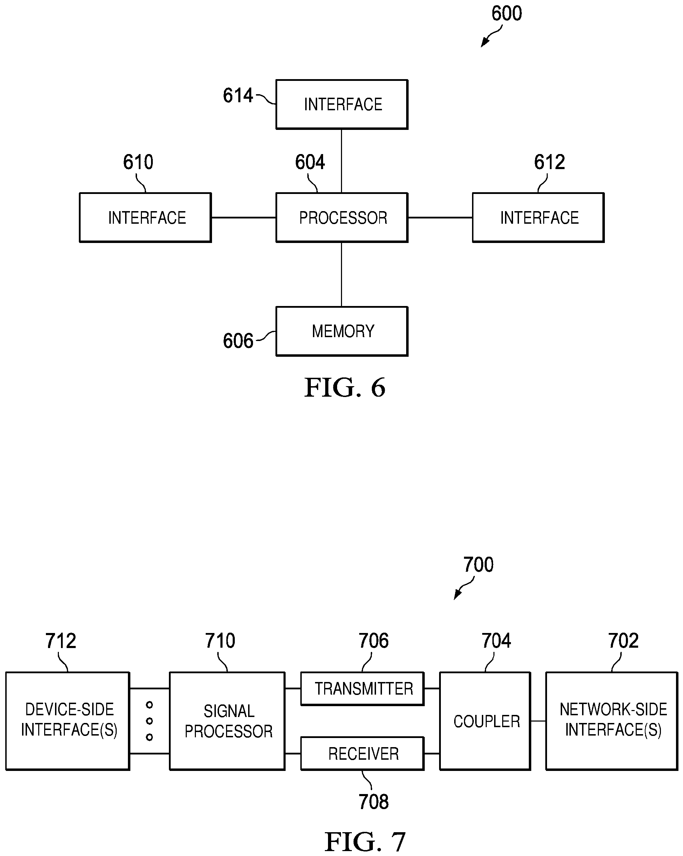

FIG. 6 illustrates a block diagram of an example processing system 600 for performing methods described herein, which may be installed in a host device. As shown, the processing system 600 includes a processor 604, a memory 606, and interfaces 610-614, which may (or may not) be arranged as shown in FIG. 6. The processor 604 may be any component or collection of components adapted to perform computations and/or other processing related tasks, and the memory 606 may be any component or collection of components adapted to store programming and/or instructions for execution by the processor 604. In an example, the memory 606 includes a non-transitory computer readable medium. The interfaces 610, 612, 614 may be any component or collection of components that allow the processing system 600 to communicate with other devices/components and/or a user. For example, one or more of the interfaces 610, 612, 614 may be adapted to communicate data, control, or management messages from the processor 604 to applications installed on the host device and/or a remote device. As another example, one or more of the interfaces 610, 612, 614 may be adapted to allow a user or user device (e.g., personal computer (PC), etc.) to interact/communicate with the processing system 600. The processing system 600 may include additional components not depicted in FIG. 6, such as long term storage (e.g., non-volatile memory, etc.).

In some examples, the processing system 600 is included in a network device that is accessing, or part otherwise of, a telecommunications network. In one example, the processing system 600 is in a network-side device in a wireless or wireline telecommunications network, such as a base station, a relay station, a scheduler, a controller, a gateway, a router, an applications server, or any other device in the telecommunications network. In other examples, the processing system 600 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some examples, one or more of the interfaces 610, 612, 614 connects the processing system 600 to a transceiver adapted to transmit and receive signaling over the telecommunications network. FIG. 7 illustrates a block diagram of a transceiver 700 adapted to transmit and receive signaling over a telecommunications network. The transceiver 700 may be installed in a host device. As shown, the transceiver 700 comprises a network-side interface 702, a coupler 704, a transmitter 706, a receiver 708, a signal processor 710, and a device-side interface 712. The network-side interface 702 may include any component or collection of components adapted to transmit or receive signaling over a wireless or wireline telecommunications network. The coupler 704 may include any component or collection of components adapted to facilitate bi-directional communication over the network-side interface 702. The transmitter 706 may include any component or collection of components (e.g., up-converter, power amplifier, etc.) adapted to convert a baseband signal into a modulated carrier signal suitable for transmission over the network-side interface 702. The receiver 708 may include any component or collection of components (e.g., down-converter, low noise amplifier, etc.) adapted to convert a carrier signal received over the network-side interface 702 into a baseband signal. The signal processor 710 may include any component or collection of components adapted to convert a baseband signal into a data signal suitable for communication over the device-side interface(s) 712, or vice-versa. The device-side interface(s) 712 may include any component or collection of components adapted to communicate data-signals between the signal processor 710 and components within the host device (e.g., the processing system 600, local area network (LAN) ports, etc.).

The transceiver 700 may transmit and receive signaling over any type of communications medium. In some examples, the transceiver 700 transmits and receives signaling over a wireless medium. For example, the transceiver 700 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such examples, the network-side interface 702 comprises one or more antenna/radiating elements. For example, the network-side interface 702 may include a single antenna, multiple separate antennas, or a multi-antenna array configured for multi-layer communication, e.g., single input multiple output (SIMO), multiple input single output (MISO), multiple input multiple output (MIMO), etc. In other examples, the transceiver 700 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the example methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a determining unit/module, a selecting unit/module, and/or a performing unit/module. The respective units/modules may be hardware, software, or a combination thereof. For instance, one or more of the units/modules may be an integrated circuit, such as field programmable gate arrays (FPGAs) or application-specific integrated circuits (ASICs).

Although the description has been described in detail, it should be understood that various changes, substitutions and alterations can be made without departing from the scope of this disclosure as defined by the appended claims. Moreover, the scope of the disclosure is not intended to be limited to the particular examples described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. A method for power control and resource selection in a wireless uplink transmission, the method comprising:
determining (310), by a user equipment, UE, a path loss between the UE and an eNodeB, eNB;
selecting (320), by the UE, an open loop transmit power control target based on the path loss according to a power control scheme for non-orthogonal access, the power control scheme requiring that lower open loop transmit power control target be selected for higher levels of path loss;
transmitting (330), by the UE, an uplink signal to the eNB over one or more non-orthogonal resources according to the selected open loop transmit power control target;
**characterized by**:
receiving, by the UE, a downlink signal from the eNB, the downlink signal associating sets of non-orthogonal resources with open loop power control targets, wherein the lower open loop power control targets are associated with sets of non-orthogonal resources having greater bandwidth capacities;
identifying which one of the sets of non-orthogonal resources is associated with the selected open loop power control target;
wherein transmitting the uplink signal to the eNB over the one or more non-orthogonal resources according to the selected open loop transmit power control target further comprises:
transmitting the uplink signal to the eNB over a first set of non-orthogonal resources at a first open loop transmit power level associated with the first set of non-orthogonal resources, the first open loop transmit power level being less than a second open loop transmit power level associated with a second set of non-orthogonal resources; and
retransmitting the uplink signal over the first set of non-orthogonal resources at an adjusted transmit power level when the previously transmitted uplink signal is not successfully received by the eNB, the adjusted transmit power level being between the first open loop transmit power level and the second open loop transmit power level.

2. The method of claim 1, further comprising:
receiving, by the UE, a downlink signal from the eNB, the downlink signal associating open loop transmit power control targets with path loss levels,
wherein selecting the open loop transmit power control target based on the path loss according to the power control scheme comprises identifying which one of the open loop transmit power control targets are associated with the path loss.

3. The method of claim 1, wherein the downlink signal associates lower open loop power control targets with larger, or higher numbers of, non-orthogonal multiple access, NOMA, physical resource blocks, PRBs.

4. The method of claim 1, wherein the downlink signal associates lower open loop power control targets with non-orthogonal spreading sequences having higher processing gains.

5. A system comprising:
an eNodeB (110), eNB, configured to transmit a downlink signal; and
a user equipment (120a, 120b), UE, configured to receive the downlink signal, to determine a path loss between the UE (120a, 120b) and the eNB (110), to select an open loop transmit power control target based on the path loss according to a power control scheme for non-orthogonal access, and to transmit an uplink signal to the eNB (110) over one or more non-orthogonal resources according to the selected open loop transmit power control target, wherein the power control scheme requires that lower open loop transmit power control targets be selected for higher levels of path loss; and
**characterized in that** the UE (120a, 120b) is specifically configured to
receive, by the UE (120a, 120b), a downlink signal from the eNB (110), the downlink signal associating sets of non-orthogonal resources with open loop power control targets, wherein the lower open loop power control targets are associated with sets of non-orthogonal resources having greater bandwidth capacities;
identify which one of the sets of non-orthogonal resources is associated with the selected open loop power control target;
transmit an uplink signal to the eNB (110) over one or more non-orthogonal resources according to the selected open loop transmit power control target by transmitting the uplink signal to the eNB (110) over a first set of non-orthogonal resources at a first open loop transmit power level associated with the first set of non-orthogonal resources, the first open loop transmit power level being less than a second open loop transmit power level associated with a second set of non-orthogonal resources; and
retransmitting the uplink signal over the first set of non-orthogonal resources at an adjusted transmit power level when the previously transmitted uplink signal is not successfully received by the eNB (110), the adjusted transmit power level being between the first open loop transmit power level and the second open loop transmit power level.

6. The system of claim 5, wherein the downlink signal includes control information that prompts the UE (120a, 120b) to transmit non-orthogonal signals at lower transmit power levels over wireless links exhibiting higher path loss levels, and wherein the eNB (110) is further configured to receive an interference signal over one or more non-orthogonal resources, and to perform successive interference cancellation on the interference signal to at least partially decode at least one of the uplink signals, the interference signal including uplink signals transmitted by different UEs (120a, 120b) according to the control information.

7. The system of claim 5, wherein the downlink signal associates open loop transmit power control targets with path loss levels, and wherein the enB (110) is configured to selecting the open loop transmit power control target based on the path loss according to the power control scheme which comprises the enB (110) being configured to identify which one of the open loop transmit power control targets are associated with the path loss.

## Patentansprüche

1. Verfahren für eine Leistungsregelung und eine Ressourcenauswahl in einer drahtlosen Uplink-Übertragung, wobei das Verfahren umfasst:
Ermitteln (310), durch ein Benutzergerät, UE, eines Pfadverlusts zwischen dem UE und einem eNodeB, eNB;
Auswählen (320), durch das UE, eines Sendeleistungsregelungsziels für offene Schleifen aufgrund des Pfadverlusts gemäß einem Leistungsregelungsschema für einen nicht-orthogonalen Zugriff, wobei das Leistungsregelungsschema erfordert, dass für höhere Pegel von Pfadverlusten ein niedrigeres Sendeleistungsregelungsziel für offene Schleifen ausgewählt wird;
Senden (330) eines Uplink-Signals von dem UE an den eNB über eine oder mehrere nicht-orthogonale Ressourcen gemäß dem ausgewählten Sendeleistungsregelungsziel für offene Schleifen;
**gekennzeichnet durch**:
Empfangen, in dem UE, eines Downlink-Signals von dem eNB, wobei das Downlink-Signal die Leistungsregelungsziele für offene Schleifen zu Gruppen von nicht-orthogonalen Ressourcen zuweist, wobei die niedrigeren Leistungsregelungsziele für offene Schleifen den Gruppen von nicht-orthogonalen Ressourcen zugewiesen werden, die größere Bandbreitenkapazitäten aufweisen;
Identifizieren, welche der Gruppen von nicht-orthogonalen Ressourcen dem ausgewählten Leistungsregelungsziel für offene Schleifen zugewiesen wurde;
wobei das Senden des Uplink-Signals zu dem eNB über die eine oder mehreren nicht-orthogonalen Ressourcen gemäß dem ausgewählten Sendeleistungsregelungsziel für offene Schleifen außerdem umfasst:
Senden des Uplink-Signals an den eNB über eine erste Gruppe von nicht-orthogonalen Ressourcen auf einem ersten Sendeleistungspegel für offene Schleifen, der zur ersten Gruppe von nicht-orthogonalen Ressourcen gehört, wobei der erste Sendeleistungspegel für offene Schleifen geringer als ein zweiter Sendeleistungspegel für offene Schleifen ist, der zu einer zweiten Gruppe von nicht-orthogonalen Ressourcen gehört; und
Neusenden des Uplink-Signals über die erste Gruppe von nicht-orthogonalen Ressourcen auf einem angepassten Sendeleistungspegel, wenn das zuvor gesendete Uplink-Signal nicht erfolgreich in dem eNB empfangen wurde, wobei der angepasste Sendeleistungspegel zwischen dem ersten Sendeleistungspegel für offene Schleifen und dem zweiten Sendeleistungspegel für offene Schleifen liegt.

2. Verfahren nach Anspruch 1, das außerdem umfasst:
Empfangen, in dem UE, eines Downlink-Signals von dem eNB, wobei das Downlink-Signal die Sendeleistungsregelungsziele für offene Schleifen den Pfadverlustpegeln zuweist,
wobei das Auswählen des Sendeleistungsregelungsziels für offene Schleifen aufgrund des Pfadverlusts gemäß dem Leistungsregelungsschema ein Identifizieren umfasst, zu welchem der Sendeleistungsregelungsziele für offene Schleifen die Pfadverluste gehören.

3. Verfahren nach Anspruch 1, wobei das Downlink-Signal größere oder höhere Nummern von physischen Ressourcenblöcken, PRBs, eines nicht-orthogonalen Mehrfachzugriffs, NOMA, den niedrigeren Leistungsregelungszielen für offene Schleifen zuweist.

4. Verfahren nach Anspruch 1, wobei das Downlink-Signal nicht-orthogonale Spreizsequenzen, die höhere Verarbeitungsgewinne aufweisen, den niedrigeren Leistungsregelungszielen für offene Schleifen zuweist.

5. System, umfassend:
einen eNodeB (110), eNB, der konfiguriert ist zum Senden eines Downlink-Signals; und
ein Benutzergerät (120a, 120b), UE, das konfiguriert ist zum Empfangen des Downlink-Signals, zum Ermitteln eines Pfadverlusts zwischen dem UE (120a, 120b) und dem eNB (110), zum Auswählen eines Sendeleistungsregelungsziels für offene Schleifen aufgrund des Pfadverlusts gemäß einem Leistungsregelungsschema für einen nicht-orthogonalen Zugriff, und zum Senden eines Uplink-Signals an den eNB (110) über eine oder mehrere nicht-orthogonale Ressourcen gemäß dem ausgewählten Sendeleistungsregelungsziel für offene Schleifen, wobei das Leistungsregelungsschema erfordert, dass für höhere Pegel von Pfadverlusten niedrigere Sendeleistungsregelungsziele für offene Schleifen ausgewählt werden; und
**dadurch gekennzeichnet, dass** das UE (120a, 120b) insbesondere konfiguriert ist zum Empfangen, in dem UE (120a, 120b), eines Downlink-Signals von dem eNB (110), wobei das Downlink-Signal die Leistungsregelungsziele für offene Schleifen zu Gruppen von nicht-orthogonalen Ressourcen zuweist, wobei die niedrigeren Leistungsregelungsziele für offene Schleifen den Gruppen von nicht-orthogonalen Ressourcen zugewiesen werden, die größere Bandbreitenkapazitäten aufweisen;
Identifizieren, welche der Gruppen von nicht-orthogonalen Ressourcen dem ausgewählten Leistungsregelungsziel für offene Schleifen zugewiesen wurde;
Senden eines Uplink-Signals an den eNB (110) über eine oder mehrere nicht-orthogonale Ressourcen gemäß dem ausgewählten Sendeleistungsregelungsziel für offene Schleifen, indem das Uplink-Signal über eine erste Gruppe von nicht-orthogonalen Ressourcen auf einem ersten Sendeleistungspegel für offene Schleifen gesendet wird, der zur ersten Gruppe von nicht-orthogonalen Ressourcen gehört, an den eNB (110), wobei der erste Sendeleistungspegel für offene Schleifen geringer als ein zweiter Sendeleistungspegel für offene Schleifen ist, der zu einer zweiten Gruppe von nicht-orthogonalen Ressourcen gehört; und
Neusenden des Uplink-Signals über die erste Gruppe von nicht-orthogonalen Ressourcen auf einem angepassten Sendeleistungspegel, wenn das zuvor gesendete Uplink-Signal nicht erfolgreich in dem eNB (110) empfangen wurde, wobei der angepasste Sendeleistungspegel zwischen dem ersten Sendeleistungspegel für offene Schleifen und dem zweiten Sendeleistungspegel für offene Schleifen liegt.

6. System nach Anspruch 5, wobei das Downlink-Signal Steuerinformationen aufweist, die das UE (120a, 120b) auffordern, nicht-orthogonale Signale auf niedrigeren Sendeleistungspegeln über drahtlose Verbindungen zu senden, die höhere Pfadverlustpegel aufweisen, und wobei der eNB (110) außerdem konfiguriert ist zum Empfangen eines Interferenzsignals über eine oder mehrere nicht-orthogonale Ressourcen und zum Ausführen einer nachfolgenden Interferenzunterdrückung an dem Interferenzsignal um mindestens ein Uplink-Signal mindestens teilweise zu decodieren, wobei das Interferenzsignal Uplink-Signale enthält, die von verschiedenen UEs (120a, 120b) gemäß den Steuerinformationen übertragen werden.

7. System nach Anspruch 5, wobei das Downlink-Signal die Pfadverlustpegel den Sendeleistungsregelungszielen für offene Schleifen zuweist, und wobei der eNB (110) konfiguriert ist zum Auswählen des Sendeleistungsregelungsziels für offene Schleifen aufgrund des Pfadverlusts gemäß dem Leistungsregelungsschema, das den eNB (110) umfasst, der konfiguriert ist zum Identifizieren, zu welchem der Sendeleistungsregelungsziele für offene Schleifen die Pfadverluste gehören.

## Revendications

1. Procédé de commande de puissance et de sélection de ressources dans une transmission de liaison montante sans fil, le procédé comprenant :
la détermination (310), par un équipement utilisateur, UE, d'une perte de trajet entre l'UE et un nœud B évolué, eNB ;
la sélection (320), par l'UE, d'une cible de commande de puissance de transmission à boucle ouverte sur la base de la perte de trajet en fonction d'un schéma de commande de puissance pour un accès non orthogonal, le schéma de commande de puissance exigeant qu'une cible de commande de puissance de transmission à boucle ouverte inférieure soit sélectionnée pour des niveaux plus élevés de perte de trajet ;
la transmission (330), par l'UE, d'un signal de liaison montante à l'eNB sur une ou plusieurs ressources non orthogonales en fonction de la cible de commande de puissance de transmission à boucle ouverte sélectionnée ;
**caractérisé par** :
la réception, par l'UE, d'un signal de liaison descendante en provenance de l'eNB, le signal de liaison descendante associant des ensembles de ressources non orthogonales à des cibles de commande de puissance à boucle ouverte, les cibles de commande de puissance à boucle ouverte inférieure étant associées à des ensembles de ressources non orthogonales ayant des capacités de bande passante supérieures ;
l'identification duquel des ensembles de ressources non orthogonales est associé à la cible de commande de puissance à boucle ouverte sélectionnée ;
la transmission du signal de liaison montante à l'eNB sur la ou les ressources non orthogonales en fonction de la cible de commande de puissance de transmission à boucle ouverte sélectionnée comprenant en outre :
la transmission du signal de liaison montante à l'eNB sur un premier ensemble de ressources non orthogonales à un premier niveau de puissance de transmission à boucle ouverte associé au premier ensemble de ressources non orthogonales, le premier niveau de puissance de transmission à boucle ouverte étant inférieur à un second niveau de puissance de transmission à boucle ouverte associé à un second ensemble de ressources non orthogonales ; et
la retransmission du signal de liaison montante sur le premier ensemble de ressources non orthogonales à un niveau de puissance de transmission ajusté lorsque le signal de liaison montante précédemment transmis n'est pas reçu avec succès par l'eNB, le niveau de puissance de transmission ajusté étant compris entre le premier niveau de puissance de transmission à boucle ouverte et le second niveau de puissance de transmission à boucle ouverte.

2. Procédé selon la revendication 1, comprenant en outre :
la réception, par l'UE, d'un signal de liaison descendante en provenance de l'eNB, le signal de liaison descendante associant des cibles de commande de puissance de transmission à boucle ouverte à des niveaux de perte de trajet,
la sélection de la cible de commande de puissance de transmission à boucle ouverte sur la base de la perte de trajet en fonction du schéma de commande de puissance comprenant l'identification de laquelle parmi les cibles de commande de puissance de transmission à boucle ouverte sont associées à la perte de trajet.

3. Procédé selon la revendication 1, le signal de liaison descendante associant des cibles de commande de puissance à boucle ouverte inférieure à des blocs de ressources physiques, PRB, à accès multiple non orthogonal, NOMA, plus grands ou plus nombreux.

4. Procédé selon la revendication 1, le signal de liaison descendante associant des cibles de commande de puissance à boucle ouverte inférieure à des séquences d'étalement non orthogonales ayant des gains de traitement supérieurs.

5. Système comprenant :
un nœud B évolué (110), eNB, configuré pour transmettre un signal de liaison descendante ; et
un équipement utilisateur (120a, 120b), UE, configuré pour recevoir le signal de liaison descendante, pour déterminer une perte de trajet entre l'UE (120a, 120b) et l'eNB (110), pour sélectionner une cible de commande de puissance de transmission à boucle ouverte sur la base de la perte de trajet en fonction d'un schéma de commande de puissance pour un accès non orthogonal, et pour transmettre un signal de liaison montante à l'eNB (110) sur une ou plusieurs ressources non orthogonales en fonction de la cible de commande de puissance de transmission à boucle ouverte sélectionnée, le schéma de commande de puissance exigeant que des cibles de commande de puissance de transmission à boucle ouverte inférieure soient sélectionnées pour des niveaux plus élevés de perte de trajet ; et
**caractérisé en ce que** l'UE (120a, 120b) est spécifiquement configuré pour :
recevoir, par l'UE (120a, 120b), un signal de liaison descendante provenant de l'eNB (110), le signal de liaison descendante associant des ensembles de ressources non orthogonales à des cibles de commande de puissance à boucle ouverte, les cibles de commande de puissance à boucle ouverte inférieure étant associées à des ensembles de ressources non orthogonales ayant des capacités de bande passante supérieures ;
identifier lequel des ensembles de ressources non orthogonales est associé à la cible de commande de puissance à boucle ouverte sélectionnée ;
transmettre un signal de liaison montante à l'eNB (110) sur une ou plusieurs ressources non orthogonales en fonction de la cible de commande de puissance de transmission à boucle ouverte sélectionnée en transmettant le signal de liaison montante à l'eNB (110) sur un premier ensemble de ressources non orthogonales à un premier niveau de puissance de transmission à boucle ouverte associé au premier ensemble de ressources non orthogonales, le premier niveau de puissance de transmission à boucle ouverte étant inférieur à un second niveau de puissance de transmission à boucle ouverte associé à un second ensemble de ressources non orthogonales ; et
retransmettre le signal de liaison montante sur le premier ensemble de ressources non orthogonales à un niveau de puissance de transmission ajusté lorsque le signal de liaison montante précédemment transmis n'est pas reçu avec succès par l'eNB (110), le niveau de puissance de transmission ajusté étant compris entre le premier niveau de puissance de transmission à boucle ouverte et le second niveau de puissance de transmission à boucle ouverte.

6. Système selon la revendication 5, le signal de liaison descendante comprenant des informations de commande qui incitent l'UE (120a, 120b) à transmettre des signaux non orthogonaux à des niveaux de puissance de transmission inférieurs sur des liaisons sans fil présentant des niveaux de perte de trajet supérieurs, et l'eNB (110) étant en outre configuré pour recevoir un signal d'interférence sur une ou plusieurs ressources non orthogonales, et pour réaliser une annulation d'interférence successive sur le signal d'interférence pour décoder au moins partiellement au moins un des signaux de liaison montante, le signal d'interférence comprenant des signaux de liaison montante transmis par différents UE (120a, 120b) en fonction des informations de commande.

7. Système selon la revendication 5, le signal de liaison descendante associant des cibles de commande de puissance de transmission à boucle ouverte à des niveaux de perte de trajet, et l'eNB (110) étant configuré pour sélectionner la cible de commande de puissance de transmission à boucle ouverte sur la base de la perte de trajet en fonction du schéma de commande de puissance ce qui comprend le fait que l'eNB (110) est configuré pour identifier laquelle parmi les cibles de commande de puissance de transmission à boucle ouverte sont associées à la perte de trajet.
